# EUROPEAN PATENT SPECIFICATION

(11) **EP 1 779 989 B1**
(45) Date of publication and mention of the grant of the patent: **05.05.2010**
(21) Application number: 05780484.1
(22) Date of filing: 16.08.2005
(51) Int. Cl.: B29C 33/02, B29C 33/10, B29C 35/02, B29L 30/00

(54) **VULCANIZING MOLD FOR MOLDING TIRE AND METHOD OF MANUFACTURING THE SAME**
VULKANISIERUNGSFORM ZUR REIFENFORMUNG UND HERSTELLUNGSVERFAHREN DAFÜR
MOULAGE DE VULCANISATION POUR LE MOULAGE DE PNEU ET PROCÉDÉ DE FABRICATION

(30) Priority: 20.08.2004 JP 2004241019
(43) Date of publication of application: 02.05.2007
(73) Proprietor: Bridgestone Corporation, Tokyo 104-8340 (JP)
(72) Inventor: TANAKA, Hideaki, c/o Bridgestone Corporation, Kodaira-city, Tokyo 187-8531 (JP)
(74) Representative: Whalley, Kevin
(86) International application number: PCT/JP2005/014932
(87) International publication number: WO 2006/019087

(56) References cited:
- GB-A- 2 341 339
- JP-A- 1 053 816
- JP-A- 10 034 664
- JP-A- 10 296 735
- US-A- 4 576 559

## Description

The present invention relates to a tire vulcanizing mold for tire forming.

A green tire is vulcanized in a tire vulcanizing mold to form a tire. Ventilating holes (vents) are formed in parts of the tire vulcanizing mold corresponding to parts of the tire where bares are likely to be formed, to prevent the formation of marks, due to the generation of bares, in the surface of the tire during vulcanization (For example, refer to Patent Document 1).

Patent Document 1: JP-U 59-14832

If the vents are too large, rubber being vulcanized oozes into the vents and forms spews on the surface of the tire. Additional work for removing the spews is necessary. Too small vents are liable to be clogged with rubber.

Vents mentioned in Patent document 1 are through holes each having a cross section of circular shape or other shapes. The inner open ends of the vents are arranged on the molding surface of the tire vulcanizing mold. When the vents are such simple through holes and are formed in a small diameter to prevent the formation of spews, such vent holes having a small diameter are liable to be clogged with dirt. Once the vent holes are clogged with dirt, it is difficult to remove it from the vent holes.

The present invention has been made in view of the foregoing problem and it is an object of the present invention to provide a tire vulcanizing mold provided with vents opening in openings having an improved shape in the molding surface, and capable of preventing the formation of bares and spews, of preventing the vents from being clogged and of ensuring easy cleaning of the vents.
Attention is also drawn to the disclosure of GB-2341339 A and JP-01-053816 A.

To attain the above object, a tire vulcanizing mold according to the present invention includes: a side mold provided with exhaust slots having outer open ends opening in the outside surface thereof, and grooves of a predetermined width formed in the molding surface thereof and communicating with inner open ends of the exhaust slots; and flat bars of a predetermined thickness loosely fitted in the grooves such that the inner end surfaces thereof are flush with the molding surface of the side mold.
Desirably, the side mold and the flat bars are made of the same material

Preferably, slits are defined in the molding surface of the side mold by the flat bars and side surfaces of the grooves, and the slits have a width between 0.001 and 0.02 mm.

The vulcanizing mold of the invention further includes nuts fixed to the side mold, and screw rods screwed in the nuts and extending from the outside surface of the side mold toward the grooves and having end parts rotatably connected to the flat bars.

Typically, the side mold is an annular mold for molding a sidewall of a tire, the grooves are annular grooves formed in the annular molding surface of the side mold, and the flat bars are rings fitted in the annular grooves, respectively.

The present invention also provides a method of manufacturing a vulcanizing mold, which comprises the steps of: making a workpiece for forming a side mold, having an unfinished molding surface having a finishing allowance and provided with exhaust slots mutually communicating an inside surface and an outside surface thereof; forming grooves in the molding surface of the side mold so as to be communicating with inner open ends of the exhaust slots; loosely fitting flat bars in the grooves; and grinding the molding surface of the side mold and the inner end surfaces of the flat bars simultaneously to finish the molding surface and the inner end surfaces of the flat bars.

The tire vulcanizing mold of the present invention has, in the molding surface thereof, grooves of a suitable width capable of ensuring ventilation, of preventing the formation of bares and spews during vulcanization and of preventing the grooves from being clogged. This can be ensured by loosely fitting flat bars of a predetermined thickness in the grooves to form slits between the side walls of the grooves and the flat bars. Thus, dirt packed in the slits can be easily removed.

When the flat bars and the mold are made of the same material, the flat bars and the mold have the same coefficient of thermal expansion. Consequently, the width of the slits can be kept constant during vulcanization.

The preferred width between 0.001 and 0.02 mm of the slits defined by the flat bars and side surfaces of the grooves can prevent the formation of spews and the clogging of the exhaust slots.

Nuts are fixed to the mold, and screw rods are screwed in the nuts so as to extend from the outside surface of the mold toward the grooves and have end parts rotatably connected to the flat bars. Therefore, even if the slits formed in the molding surface of the mold between the side surfaces of the grooves and the flat bars are clogged with dirt, the dirt can be easily forced out of the slits by turning the screw rods screwed in the nuts to project the flat bars connected to the end parts of the screw rods from the molding surface of the mold. The flat bars can be retracted into the grooves by turning the screw rods in the opposite direction after removing the dirt.

In the case wherein an annular mold for forming a sidewall of a tire is provided with annular grooves formed in an annular molding surface of the mold, and the flat bars are rings fitted in the annular grooves, ventilation is ensured by the slits defined by side surfaces of the annular grooves and the annular flat bars to prevent the formation of bares and spews in the sidewall of the tire. Further, the slits formed in the molding surface of the mold are not easily clogged with dirt, and dirt can be easily removed from the slits when the slits are clogged with dirt.

The method of manufacturing a vulcanizing mold according to the present invention grinds the molding surface of the side mold and the inner end surfaces of the flat bars simultaneously to finish the molding surface of the vulcanizing mold. Therefore, the method can easily manufacture the vulcanizing mold provided with the slits, which are formed in the molding surface of the side mold between the side surfaces of the grooves and the flat bars in an optimum width and which are not easily clogged with dirt. Thus, the method enables prevention of the formation of bares and spews in the mold and prevention of formation of marks on the vulcanized tires.
This invention will be further described with reference to the accompanying drawings, wherein

Fig. 1 is a front elevation of a side mold in a first embodiment of the present invention taken from a position facing the molding surface of the side mold;
Fig. 2 is a rear view of the side mold in the first embodiment;
Fig. 3 is a sectional view taken on the line III-III in Fig. 1;
Fig. 4 is a sectional view of the side mold in the first embodiment provided with a flat bar;
Figs. 5(1), 5(2), 5(3) and 5(4) are enlarged sectional views of assistance in explaining steps of machining a workpiece to form the side mold in the first embodiment, showing a part of the side mold in the first embodiment around an annular groove and an exhaust slot connected to the annular groove;
Figs. 6(1) and 6(2) are enlarged sectional views taken on the line VI-VI in Fig. 1, showing a flat bar moving mechanism including a flat bar and a screw rod of the vulcanizing mold in the first embodiment in a state where the screw rod is not turned and in a state where the screw rod has been turned, respectively;
Figs. 7(1) and 7(2) are enlarged sectional views showing a flat bar moving mechanism including a flat bar and a rod of a vulcanizing mold in an embodiment which is not however according to the present invention in a state where the rod is not turned and in a state where the screw rod has been turned, respectively;
Fig. 8 is a front elevation of a side mold in another embodiment of the present invention taken from a position facing the molding surface of the side mold;
Fig. 9 is a rear view of the side mold in the Fig. 8 embodiment;
Fig. 10 is a sectional view taken on the line x-x in Fig. 8; and
Figs. 11 (1) and 11 (2) are enlarged sectional views taken on the line XI-XI in Fig. 8, respectively showing a flat bar and a bolt in a state where the bolt is not operated and a state where the bolt has been operated.

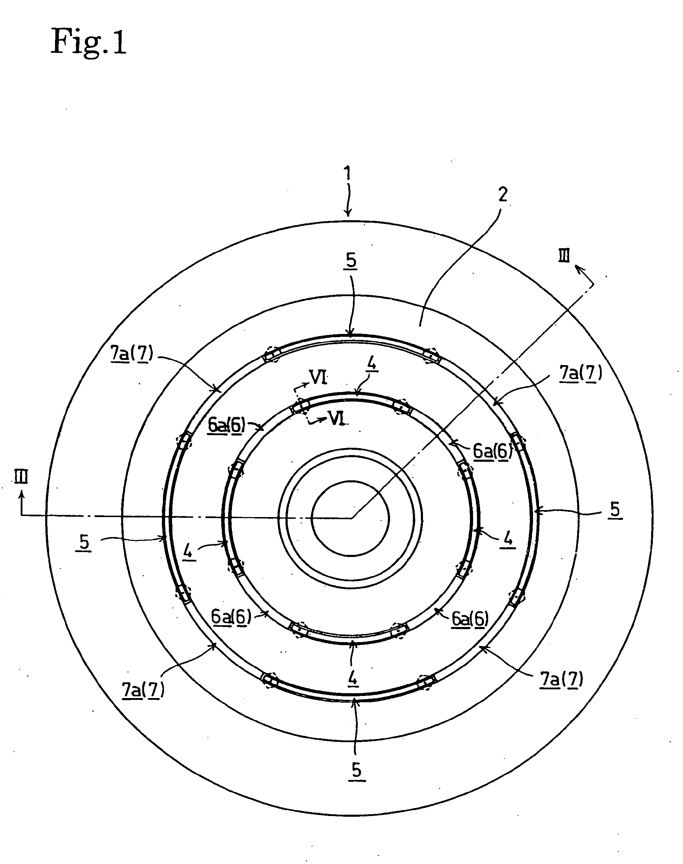

A first embodiment of the present invention will be described with reference to Figs. 1 to 6.

A vulcanizing mold in a first embodiment of the present invention for forming a tire includes a side mold 1 for forming a sidewall of a tire.

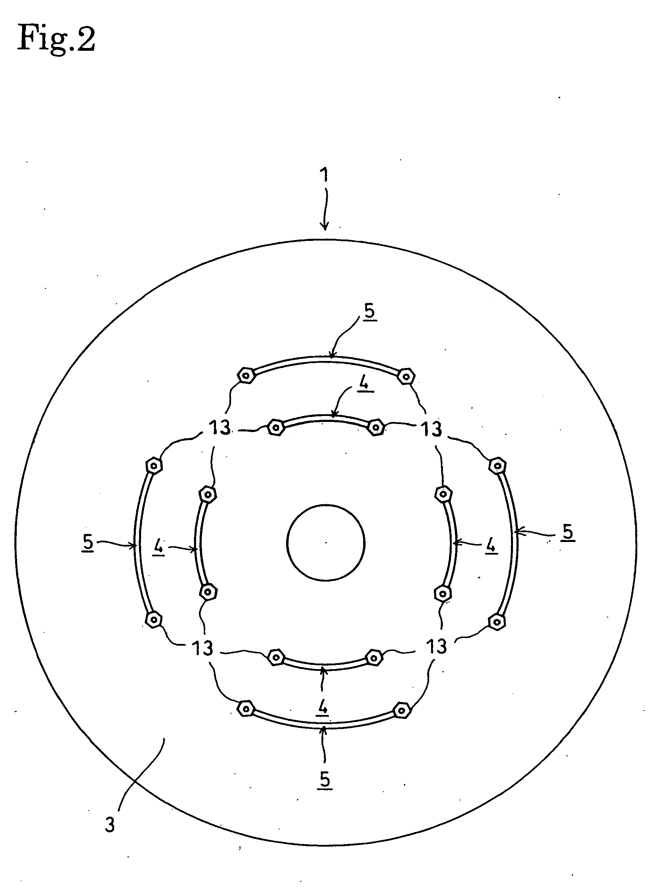

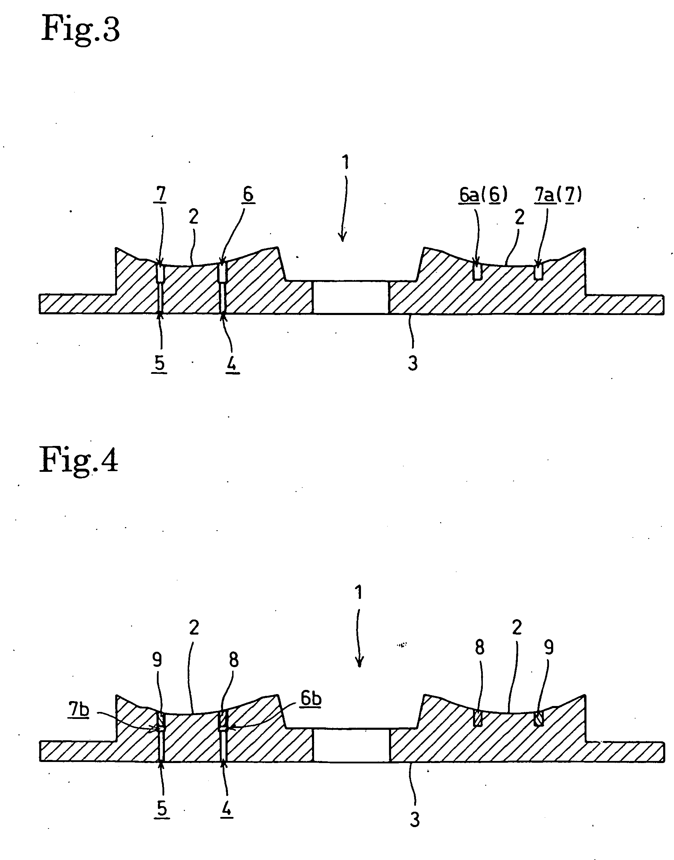

Fig. 1 shows a front elevation of the side mold 1 taken from a position facing the molding surface of the side mold 1, Fig. 2 shows a rear view of the side mold 1, and Fig. 3 shows a section taken on the line III-III in Fig. 1. The side mode 1 shown in Figs. 1 to 3 is not yet provided with flat bars 8 and 9 to be mentioned hereinafter.

The side mold 1 is an annular steel structure usually made by processing a stainless steel plate. The side mold 1 has a concavely curved, annular molding surface 2, and a flat back surface 3 on the opposite outer side.

Four exhaust slots 4 having the shape of a circular arc are formed in the side mold 1 on a first circle, and four exhaust slots 5 having the shape of a circular arc are formed in the side mold 1 on a second circle concentric with the first circle and having a diameter greater than the first circle. The exhaust slots 4 and 5 extend between and mutually communicating the molding surface 2 and the back surface 3. An annular groove 6 is formed in the molding surface 2 so as to correspond to the four exhaust slots 4 formed on the first circle. An annular groove 7 is formed in the molding surface 2 so as to correspond to the four exhaust slots 5 formed on the second circle.

The annular grooves 6 and 7 are formed in parts of the molding surface 2 corresponding to those of the surface of the sidewall of the tire in which bares are likely to be formed. The annular grooves 6 and 7 are formed in a predetermined width w of, for example, about 3.01 mm slightly wider than that of the exhaust slots 4 and 5 and in a predetermined depth.

The inner annular groove 6 has four bottomless sections continuous with the exhaust slot 4, and four bottomed sections 6a, which are arranged alternately in the circumferential direction of the groove 6. The outer annular groove 7 has four bottomless sections continuous with the exhaust slot 5, and four bottomed sections 7a, which are arranged alternately in the circumferential direction of the groove 7. The bottomless sections are formed in a depth somewhat greater than that of the bottomed sections so that the bottomless sections may be continuous with the exhaust slots 4 and 5.

Flat bars 8 and 9 respectively having annular shapes are loosely fitted in the annular grooves 6 and 7, respectively. The flat bars 8 and 9 are made by processing a steel strip of a predetermined thickness d of, for example, 3 mm. Preferably, the side mold 2 and the flat bars 8 and 9 are made of the same material. The thickness of the flat bars 8 and 9 is slightly smaller than the width w of the annular grooves 6 and 7. Thus the flat bars 8 and 9 are fitted in the annular grooves 6 and 7, respectively, in a loose fit.

Referring to Figs. 3 and 4, the flat bars 7 and 9 are seated on the bottoms of the bottomed sections 6a and 7a, respectively, because the depth of the bottomed sections 6a and 7a is smaller than that of the bottomless sections of the annular grooves 6 and 7. Thus spaces 6b and 7b continuous with the exhaust slots 4 and 5 are formed under the bottomless sections of the annular grooves 6 and 7 corresponding to the exhaust slots 4 and 5, respectively. The inner end surfaces of the flat bars 8 and 9 respectively fitted in the annular grooves 6 and 7 are flush with the molding surface 2.

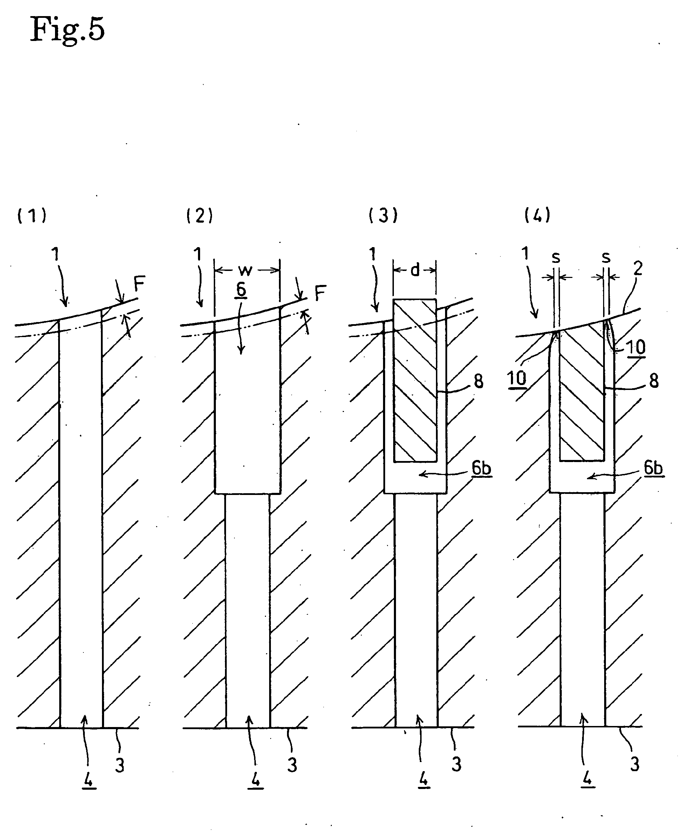

Steps of making the side mold 1 will be described with reference to Fig. 5.

Figs. 5(1) through 5(4) are enlarged sectional views of the bottomless section of the inner annular groove 6 continuous with the exhaust slot 4. A workpiece for forming the side mold 1 is produced by casting. The cast workpiece is provided with the exhaust slots 4 and has an unfinished molding surface having a finishing allowance F as shown in Fig. 5(1).

The annular groove 6 of the predetermined width w is formed in the unfinished molding surface by a turning operation by a lathe as shown in Fig. 5(2). The annular groove 6 is slightly wider than the exhaust slots 4.

Then, the flat bar 8 of the predetermined thickness d is loosely fitted in the annular groove 6 as shown in Fig. 5(3). At this stage, an inner end part of the flat bar 8 projects from the open end of the annular groove 6

The molding surface and the flat bar 8 are ground simultaneously to finish the side mold 1. The finishing allowance F of the unfinished molding surface of the workpiece is removed by grinding and, at the same time, the inner end part of the flat bar 8 projecting from the open end of the annular groove 6 is removed by grinding so that the inner end surface of the flat bar 8 is flush with the molding surface 2.

The outer and inner edges of the open end of the annular groove 6 are deformed toward each other and the distance between the edges is reduced slightly. Thus slits 10 of a width s between 0.001 and 0.02 mm are formed accurately between the outer side surface of the flat bar 8 and the outer edge of the annular groove 6 and between the inner side surface of the flat bar 8 and the inner edge of the annular groove 6, respectively.

Thus an exhaust passage extending between the molding surface 2 and the back surface 3 of the side mold 1 is formed by the slits 10, the gaps between the annular groove and the flat bar 8, the space 6b and the exhaust slot 4 to prevent the formation of bares during the vulcanization molding. Since the slits 10 have the very narrow width s between about 0.001 and 0.02 mm, rubber being vulcanized cannot flow into the slits 10 during vulcanization and hence spews are not formed.

The side mold 1 and the flat bar 8 are made of the same ferrous material and hence have the same coefficient of thermal expansion. Therefore, the width s of the slits 10 remains constant between about 0.001 and 0.02 mm regardless of temperature variation during vulcanization.

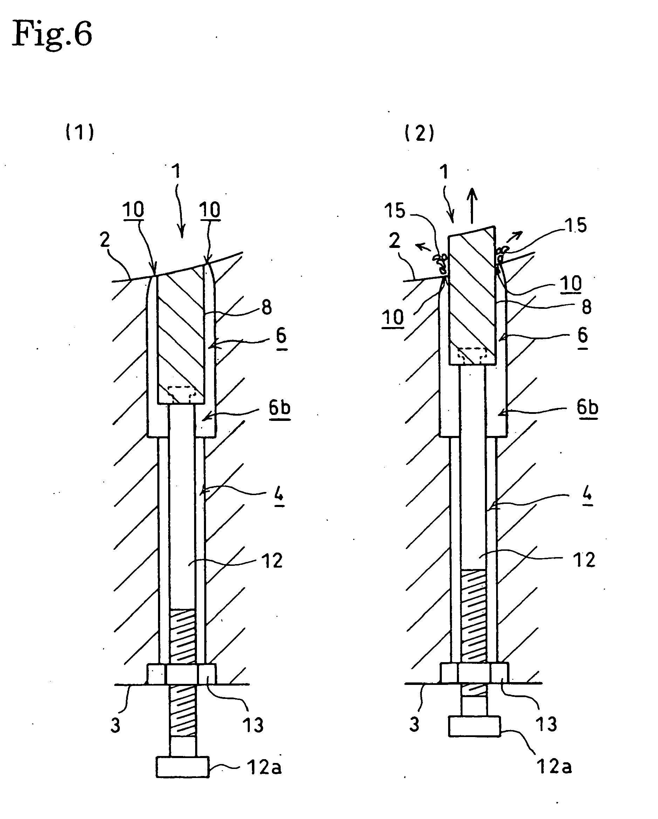

As shown in Fig. 6(1), eight screw rods 12 have inner ends rotatably connected to eight parts of the outer end surface of the annular flat bar 8. The eight parts are arranged at circumferential intervals. Each screw rod 12 is passed through the exhaust slot 4 having the shape of a circular arc and is screwed through a nut 13 embedded in the back surface 3 of the side mold 1. An outer end part of the screw rod 12 projects from the back surface 3 of the side mold 1. A knob 12a is attached to the outer end part of the screw rod 12 projecting from the back surface 3.

Normally, the inner end surface of the flat bar 8 is flush with the molding surface 2 as shown in Fig. 6(1). The flat bar 8 is held in a state shown in Fig. 6(1) during vulcanization. In the state shown in Fig. 6 (1), the slits 10 have the optimum width s between 0.001 and 0.02 mm. Thus the slits 10 are not clogged easily with dirt. Even if the slits 10 are clogged slightly with dirt, the dirt can be easily removed by brushing or the like.

If dirt enter the slits 10 into the depth of the slits 10 after the side mold 1 has been used repeatedly for vulcanization and the dirt cannot be easily removed by brushing or the like, the knobs 12a of all the screw rods 12 arranged on the back surface 3 of the side mold are turned to push out an end part of the flat bar 8 by several millimeters from the molding surface 2 as shown in Fig. 6(2). Consequently, dirt 15 filling up the slits 10 can be forced out of the slits 10 by the flat bar 8 to remove the dirt 15 from the slits 10.

In the state shown in Fig. 6(2), the dirt 15 forced out of the slits 10 can be removed from the molding surface 2 by blast cleaning or spray cleaning that sprays a cleaning liquid on the molding surface 2.

After the molding surface 2 has been thus cleaned, the screw rods 12 are rotated in the opposite direction to bring the flat bar 8 into contact with the bottom surface of the bottomed sections 6a of the annular groove 6. Thus the inner end surface of the flat bar 8 becomes flush with the molding surface 2 as shown in Fig. 6(1).

The construction, effects and functions of the outer flat bar 9 and the annular groove 7 are the same as those of the inner flat bar 8 and the annular groove 6.

The width of slits 10 defined by the flat bar 9 and the annular groove 7 is between 0.001 and 0.02 mm, screw rods 12 have inner ends rotatably connected to the annular flat bar 9, and each screw rod 12 is passed through the exhaust slot 5 and is screwed through a nut 13 and an outer end part of the screw rod 12 projects from the back surface 3 of the side mold 1.

As apparent from the foregoing description, dirt adhering to the molding surface 2 of the side mold 1 can be completely removed by a simple cleaning operation.

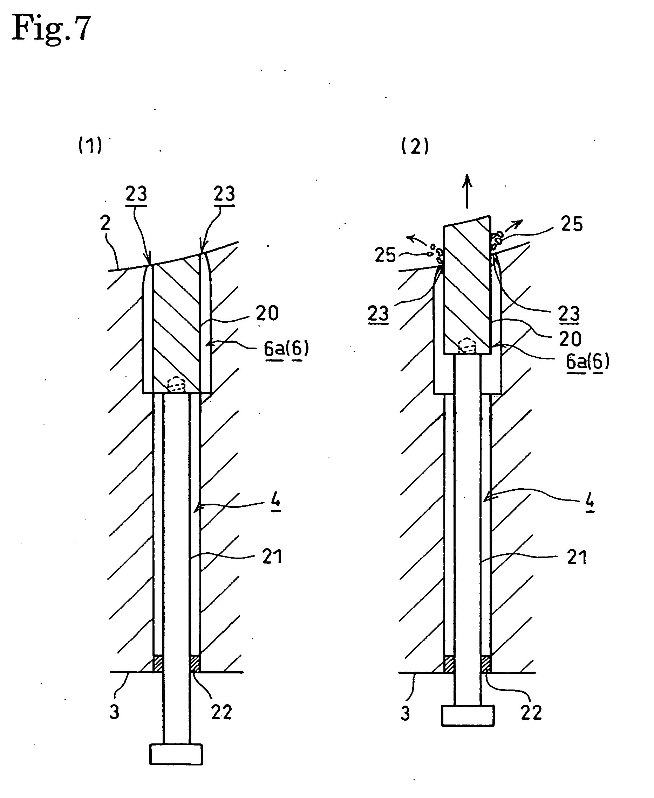

A flat bar moving mechanism of a vulcanizing mold in a an embodiment which is not however of the present invention will be described with reference to Figs. 7(1) and 7(2), in which parts like or corresponding to those of the first embodiment are designated by the same reference characters.

A side mold 1 of this embodiment is the same in shape as the side mold 1 of the first embodiment and has a molding surface 2, a back surface 3 and is provided with exhaust slots 4 and annular groove 6.

A flat bar 20 is the same in shape as the flat bar 8. The flat bar 20 and the annular groove 6 define slits 23 of a width between 0.001 and 0.02 mm.

Rods 21 have externally threaded end parts, respectively. Eight internally threaded holes are arranged at circumferential intervals in the outer end surface of the flat bar 20. The externally threaded end parts of the rods 21 are screwed into the internally threaded holes of the flat bar 20.

The rods 21 extend through the exhaust slots 4. The rods 21 are supported slidably in bearings 22 fitted in bores formed in the back surface 3 so as to coincide with the exhaust slots 4. Outer end parts of the rods 21 project from the back surface 3. The flat bar 20, similarly to the flat bar 8, is seated on the bottom surfaces of bottomed sections 6a of the annular groove 6 and is held in place. The flat bar 20 cannot sink in the annular groove 6 beyond the bottom surfaces of the bottomed sections 6a of the annular groove 6.

The slits 23 have the very narrow width between 0.001 and 0.02 mm. Thus the slits 23 are not clogged easily with dirt. If the slits 23 are clogged slightly with dirt after the side mold 1 has been used repeatedly for vulcanization, the rods 21 are pushed from the side of the back surface 3 into the exhaust slots 4 so as to project an inner end part of the flat bar 20 from the molding surface 2 by several millimeters as shown in Fig. 7(2). Consequently, dirt 25 filling up the slits 23 can be forced out of the slits 23 by the flat bar 20 to remove the dirt 25 from the slits 23.

In the state shown in Fig. 7(2), the dirt 25 forced out of the slits 23 can be removed from the molding surface 2 by, for example, a cleaning operation that spouts a cleaning liquid onto the molding surface 2. After the molding surface 2 has been thus cleaned, the rods 21 are pulled to seat the flat bar 20 on the bottom surface of the bottomed sections 6a of the annular groove 6. Thus the inner end surface of the flat bar 20 becomes flush with the molding surface 2.

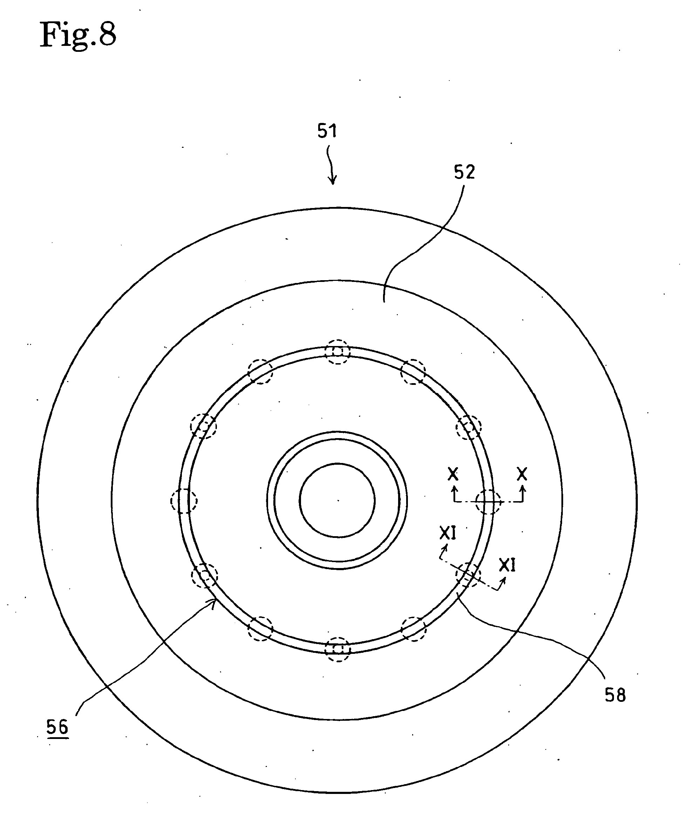

A side mold 51 included in a vulcanizing mold in another embodiment of the present invention will be described with reference to Figs. 8 to 11(2).

The side mold 51 has an annular shape which is similar to the annular shape of the side mold 1 of the foregoing embodiment. The side mold 51 has a molding surface 52 provided with a single annular groove 56. An annular flat bar 58 is fitted in the annular groove 56.

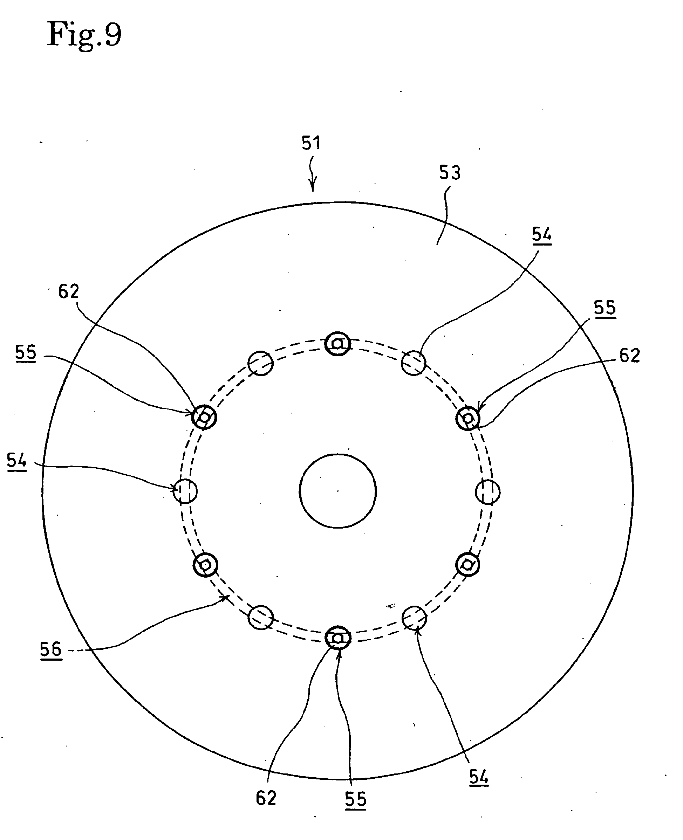

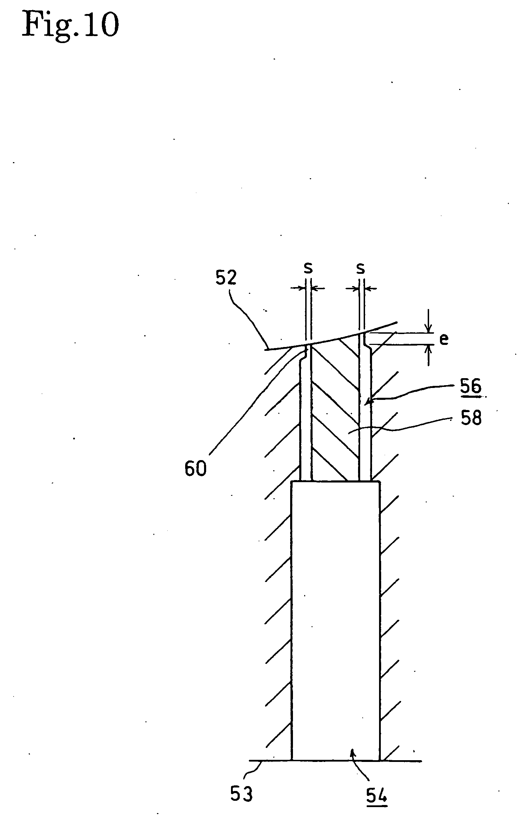

As shown in Fig. 9, six exhaust holes 54 and six through holes 55 are formed in the back surface 53 of the side mold 51. The six exhaust holes 54 and the six through holes 55 are arranged alternately at equal angular intervals on a circle coaxial with and having a diameter equal to that of the annular groove 56. The exhaust holes 54 and the internally threaded holes 5 extend toward the annular groove 56. As shown in Fig. 10, the diameter of the exhaust holes 54 is greater than the width of the annular groove 56. Slits 60 defined by the annular groove 56 and the flat bar 58 has a width s between 0.001 and 0.02 mm and a depth e between 1 and 2 mm. Gaps between one of the side surfaces of the flat bar 58 and one of the side surfaces of a part excluding an open end part of the annular groove 56 are between about 0.5 and abut 1.0 mm.

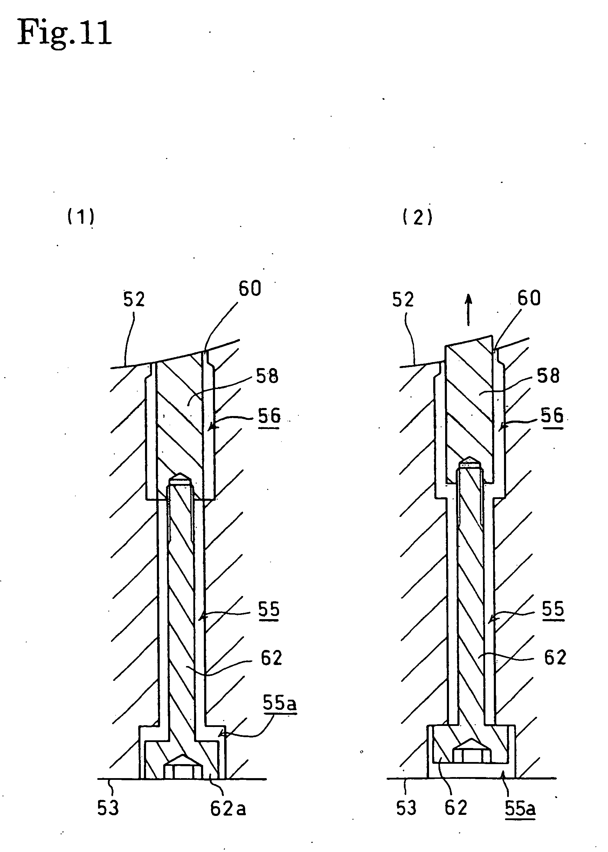

Referring to Fig. 11(1), a mouth of each of the through hole 55 on the side of the back surface is enlarged to form a counterbore 55a. Hexagonal socket head cap screws 62 are inserted into the through holes 55 and into internally threaded holes formed in the flat bar 58. Each of the hexagonal socket head cap screws 62 has a hexagonal socket head 62a of a diameter greater than that of the hexagonal socket head screw 62. The hexagonal socket heads 62 are received entirely in the counterbores 55a of the through holes 55.

Normally, the inner end surface of the flat bar 58 to which the hexagonal socket head screws 62 are connected is flush with the molding surface 52 and the bottom surfaces of the hexagonal socket heads 62a of the hexagonal socket head screws 62 are separated from the bottom surfaces of the counterbores 55a, respectively, as shown in Fig. 11 (1). An end part of the flat bar 58 can be projected from the molding surface 52 by several millimeters as shown in Fig. 11(2) by pushing the hexagonal socket head screws 62 further into the through holes 55.

Thus an exhaust passage extending between the molding surface 52 and the back surface 53 of the side mold 51 is formed by the slits 60, the gaps between the annular groove 56 and the flat bar 58, and the exhaust holes 54 to prevent the formation of bares during vulcanization.

Since the slits 60 have the very narrow width s between about 0.001 and 0.02 mm, rubber being vulcanized cannot flow into the slits 60 during vulcanization and hence spews are not formed and the slits 60 are not easily clogged with dirt. Even if the slits are clogged slightly with dirt, the dirt can be easily removed from the slits by brushing or the like.

If dirt enter the slits 60 into the depth of the slits 60 after the side mold 1 has been used repeatedly for vulcanization and the dirt cannot be easily removed by brushing or the like, the six hexagonal socket head cap screws 62 are pushed to push out an end part of the flat bar 58 from the molding surface 52 as shown in Fig. 11(2). Consequently, dirt filling up the slits 60 can be forced out of the slits 60 by the flat bar 58 to remove the dirt from the slits 60. Then, the dirt 15 forced out of the slits 60 can be easily and surely removed from the molding surface 52 by blast cleaning or spray cleaning that sprays a cleaning liquid on the molding surface 52.

The flat bar 58 thus projected from the molding surface 52 can be returned to the position shown in Fig. 11(1) by pushing the flat bar 58 from the side of the molding surface 52 into the annular groove 56.

Although the vulcanizing mold is provided with the six exhaust holes 54, the suitable number of the exhaust holes is between four and eight. Although the vulcanizing mold is provided with the six hexagonal socket head cap screws 62, the suitable number of the hexagonal socket head cap screws is between six and eight.

## Claims

1. A tire vulcanizing mold comprising:
a side mold (1) provided with exhaust slots (4, 5) having outer open ends opening in an outside surface (3) thereof, and grooves (6) of a predetermined width (w) formed in a molding surface (2) thereof and communicating with inner open ends of the exhaust slots; and
flat bars (8) of a predetermined thickness loosely fitted in the grooves (6) such that the inner end surfaces thereof are flush with the molding surface (2) of the side mold(1);
**characterised by** further comprising nuts (13) fixed to the side mold (1), and screw rods (12) screwed in the nuts and extending from the outside surface (3) of the side mold(1) toward the grooves (6) and having end parts rotatably connected to the flat bars (8).

2. A tire vulcanizing mold as claimed in claim 1, wherein the side mold (1) and the flat bars (8) are made of the same material.

3. A tire vulcanizing mold as claimed in claim 2, wherein slits (10) are defined in the molding surface (2) of the side mold (1) by the flat bars (8) and side surfaces of the grooves (6), and the slits have a width between 0.001 and 0.02 mm.

4. A tire vulcanizing mold as claimed in claim 1 or 2, wherein the side mold is an annular mold (1) for molding a sidewall of a tire, the grooves (6) are annular grooves formed in the annular molding surface of the side mold, and the flat bars (8) are rings fitted in the annular grooves (6), respectively.

5. A method of manufacturing a vulcanizing mold comprising the steps of:
making a workpiece for forming a side mold (1; 51) having an unfinished molding surface having a finishing allowance, and provided with exhaust slots (4, 5; 54) mutually communicating an inside surface (2; 52) and an outside surface (3; 53) thereof;
forming grooves (6; 56) in the molding surface of the side mold (1; 51) so as to be communicating with inner open ends of the exhaust slots (4, 5; 54);
loosely fitting flat bars (8; 58) in the grooves (6; 56); and
grinding the molding surface of the side mold (1; 51) and inner end surfaces of the flat bars (8; 58) simultaneously to finish the molding surface and the inner end surfaces of the flat bars.

## Patentansprüche

1. Reifenvulkanisierform, die aufweist:
eine Seitenform (1), die mit Austrittsschlitzen (4, 5), die äußere offene Enden aufweisen, die sich in einer Außenfläche (3) davon öffnen, und Nuten (6) von einer vorgegebenen Breite (w) versehen ist, die in einer Formoberfläche (2) davon gebildet werden und mit inneren offenen Enden der Austrittsschlitze in Verbindung stehen; und
flache Stäbe (8) mit einer vorgegebenen Dicke, die locker in die Nuten (6) eingepasst werden, so dass deren innere Endflächen mit der Formoberfläche (2) der Seitenform (1) bündig sind;
**dadurch gekennzeichnet, dass** sie außerdem Muttern (13), die an der Seitenform (1) befestigt sind, und Gewindestäbe (12) aufweist, die in die Muttern geschraubt werden und sich von der Außenfläche (3) der Seitenform (1) in Richtung der Nuten (6) erstrecken und Endteile aufweisen, die drehbar mit den flachen Stäben (8) verbunden sind.

2. Reifenvulkanisierform nach Anspruch 1, bei der die Seitenform (1) und die flachen Stäbe (8) aus dem gleichen Material hergestellt sind.

3. Reifenvulkanisierform nach Anspruch 2, bei der Schlitze (10) in der Formoberfläche (2) der Seitenform (1) durch die flachen Stäbe (8) und der Seitenflächen der Nuten (6) definiert werden, und wobei die Schlitze eine Breite zwischen 0,001 und 0,02 mm aufweisen.

4. Reifenvulkanisierform nach Anspruch 1 oder 2, bei der die Seitenform eine Ringform (1) für das Formen einer Seitenwand eines Reifens ist, wobei die Nuten (6) Ringnuten sind, die in der ringförmigen Formoberfläche der Seitenform gebildet werden, und wobei die flachen Stäbe (8) Ringe sind, die jeweils in die Ringnuten (6) eingepasst werden.

5. Verfahren zur Herstellung einer Vulkanisierform, das die folgenden Schritte aufweist:
Herstellen eines Werkstückes für das Formen einer Seitenform (1; 51), die eine unbearbeitete Formoberfläche mit einer Fertigbearbeitungszugabe aufweist und mit Austrittsschlitzen (4, 5; 54) versehen ist, die wechselseitig mit einer Innenfläche (2; 52) und einer Außenfläche (3; 53) davon verbunden sind;
Ausbilden von Nuten (6; 56) in der Formoberfläche der Seitenform (1; 51), um so mit inneren offenen Enden der Austrittsschlitze (4, 5; 54) in Verbindung zu kommen;
lockeres Anbringen der flachen Stäbe (8; 58) in die Nuten (6; 56); und
gleichzeitiges Schleifen der Formoberfläche der Seitenform (1; 51) und der inneren Endflächen der flachen Stäbe (8; 58), um die Formoberfläche und die inneren Endflächen der flachen Stäbe fertigzustellen.

## Revendications

1. Moule de vulcanisation d'un bandage pneumatique, comprenant :
un moule latéral (1), comportant des fentes d'échappement (4, 5), comportant dans leur surface externe (3) des extrémités externes ouvertes, et des rainures (6) d'une largeur prédéterminée (w) formées dans une surface de moulage de celui-ci (2) et communiquant avec des extrémités internes ouvertes des fentes d'échappement ; et
des barres plates (8) d'une épaisseur prédéterminée, ajustées sans serrage dans les rainures (6), de sorte que les surfaces d'extrémité internes de celles-ci affleurent la surface de moulage (2) du moule latéral (1) ;
**caractérisé en ce qu'**il comprend en outre des écrous (13) fixés dans le moule latéral (1), et des tiges à vis (12) vissées dans les écrous et s'étendant de la surface externe (3) du moule latéral (1) vers les rainures (6), et comportant des parties d'extrémité connectées de manière rotative aux barres plates (8).

2. Moule de vulcanisation d'un bandage pneumatique selon la revendication 1, dans lequel le moule latéral (1) et les barres plates (8) sont composés du même matériau.

3. Moule de vulcanisation d'un bandage pneumatique selon la revendication 2, dans lequel des encoches (10) sont définies dans la surface du moulage (2) du moule latéral (1) par les barres plates (8) et des surfaces latérales des rainures (6), les encoches ayant une largeur comprise entre 0,001 et 0,02 mm.

4. Moule de vulcanisation d'un bandage pneumatique selon les revendications 1 ou 2, dans lequel le moule latéral est un moule annulaire (1) pour le moulage d'un flanc d'un bandage pneumatique, les rainures (6) étant des rainures annulaires formées dans la surface de moulage annulaire du moule latéral, et les barres plates (8) étant des bagues ajustées respectivement dans les rainures annulaires (6).

5. Procédé de fabrication d'un moule de vulcanisation, comprenant les étapes ci-dessous :
fabrication d'une pièce à travailler pour former un moule latéral (1 ; 51) comportant une surface de moulage non finie présentant une tolérance de finition, et comportant des fentes d'échappement (4, 5 ; 54) établissant mutuellement une communication entre une surface interne (2 ; 52) et une surface externe (3 ; 53) de celle-ci ;
formation de rainures (6 ; 56) dans la surface de moulage du moule latéral (1 ; 51), de sorte à établir une communication avec des extrémités internes ouvertes des fentes d'échappement (4, 5 ; 54) ;
ajustement sans serrage de barres plates (8 ; 58) dans les rainures (6 ; 56) ; et
rectification simultanée de la surface de moulage du moule latéral (1 ; 51) et des surfaces d'extrémité internes des barres plates (8 ; 58) pour assurer la finition de la surface de moulage et des surfaces d'extrémité internes des barres plates.
